# EUROPEAN PATENT SPECIFICATION

(11) **EP 4 192 149 B1**
(45) Date of publication and mention of the grant of the patent: **08.05.2024**
(21) Application number: 20946944.4
(22) Date of filing: 31.07.2020
(51) Int. Cl.: H04W 72/115, H04W 16/14, H04W 72/23, H04W 72/51

(54) **CG CONFIGURATION METHOD AND APPARATUS, AND DEVICE AND MEDIUM**
CG-KONFIGURATIONSVERFAHREN UND -VORRICHTUNG SOWIE VORRICHTUNG UND MEDIUM
PROCÉDÉ ET APPAREIL DE CONFIGURATION DE CG ET DISPOSITIF ET SUPPORT

(43) Date of publication of application: 07.06.2023
(73) Proprietor: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); XU, Jing, Dongguan, Guangdong 523860 (CN); WU, Zuomin, Dongguan, Guangdong 523860 (CN)
(74) Representative: Taor, Simon Edward William
(86) International application number: PCT/CN2020/106390
(87) International publication number: WO 2022/021412

(56) References cited:
- WO-A1-2020/033395
- WO-A1-2020/063408
- CN-A- 107 210 889
- US-A1- 2019 342 911
- ZTE CORPORATION ET AL: "Multiple configured grants", 3GPP DRAFT; R2-1914794, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20191118 - 20191122 7 November 2019 (2019-11-07), XP051815764, Retrieved from the Internet: URL:https://ftp.3gpp.org/tsg_ran/WG2_RL2/T SGR2_108/Docs/R2-1914794.zip R2-1914794 Multiple configured grants_v2.doc [retrieved on 2019-11-07]
- Intel Corporation: "Summary of views on the potential enhancements to configured grants", 3GPP Draft; R1-1809825 AI7.2.2.4.4 feature lead summary_v2, 3rd Generation Partnership Project (3GPP), Mobile Competence Centre ; 650, route des Lucioles ; F-06921 Sophia-Antipolis Cedex ; France, vol. RAN WG1, no. Gothenburg, Sweden; 20180820 - 20180824, 23 August 2018 (2018-08-23), XP051517182, Mobile Competence Centre ; 650, route des Lucioles ; F-06921 Sophia-Antipolis Cedex ; France
- InterDigital: "Summary of NR-U User plane", 3GPP Draft; R2-2003952, 3rd Generation Partnership Project (3GPP), Mobile Competence Centre ; 650, route des Lucioles ; F-06921 Sophia-Antipolis Cedex ; France, vol. RAN WG2, no. Online Meeting ;20200420 - 20200430, 1 May 2020 (2020-05-01), XP051879290, Mobile Competence Centre ; 650, route des Lucioles ; F-06921 Sophia-Antipolis Cedex ; France
- moderator (vivo): "Feature lead summary on NRU configured grant enhancement", 3GPP Draft; R1-2003375, 3rd Generation Partnership Project (3GPP), Mobile Competence Centre ; 650, route des Lucioles ; F-06921 Sophia-Antipolis Cedex ; France, vol. RAN WG1, no. e-Meeting; 20200525 - 20200605, 22 May 2020 (2020-05-22), XP051889027, Mobile Competence Centre ; 650, route des Lucioles ; F-06921 Sophia-Antipolis Cedex ; France
- LG Electronics: "Enhanced UL configured grant transmission for NR URLLC", 3GPP Draft; R1-1904632 Enhanced UL configured grant transmission for NR URLLC, 3rd Generation Partnership Project (3GPP), Mobile Competence Centre ; 650, route des Lucioles ; F-06921 Sophia-Antipolis Cedex ; France, vol. RAN WG1, no. Athens, Greece; 20190225 - 20190301, 3 April 2019 (2019-04-03), XP051707264, Mobile Competence Centre ; 650, route des Lucioles ; F-06921 Sophia-Antipolis Cedex ; France

## Description

### TECHNICAL FIELD

The present application relates to the field of wireless communication, and in particular, to a method, terminal, network device, and medium for configuring a Configured Grant (CG).

### BACKGROUND

In the new radio unlicensed frequency band (New Radio-Unlicense, NR-U), it is necessary to use Listen Before Talk (LBT) to detect the availability of the unlicensed frequency band.

Under NR-U, there is an interference-controlled scenario, so how to configure a CG to UE is an urgent problem to be solved.

WO2020063408A1 discloses methods and devices to enable configuration of a selected set of electronic devices (EDs) that are allocated the same time-domain resources and either orthogonal or the same frequency interlaces on a same unlicensed channel. Configuring the selected set of EDs in order to align transmission starting points in the unlicensed channel and utilizing blocking symbols for at least some of the transmission starting points, may mitigate mutual blocking during LBT procedures.

3GPP Draft, R2-1914794, discusses how to use multiple configured grants for NR-U, as well as which agreements in IIOT may be used for NR-U.

### SUMMARY

Embodiments of the present application provide a method, terminal, network device, and storage medium for configuring a CG. The technical solutions are as follows.

According to an aspect of the present application, a method is provided as set out in claim 1. Optional features are set out in claims 2 to 4.

According to an aspect of the present application, a method is provided as set out in claim 5. Optional features are set out in claims 6 to 8.

According to an aspect of the present application, a terminal is provided as set out in claim 9.

According to an aspect of the present application, a network device is provided as set out in claim 10..

According to an aspect of the present application, a computer-readable storage medium is provided as set out in claim 11.

By configuring at least one of the first type of CG and the second type of CG on the unlicensed band by the network device, enhanced multiple types of CGs can be provided in the interference-controlled scenario of NR-U, thereby ensuring the communication quality and communication success rate in such scenario.

### BRIEF DESCRIPTION OF THE DRAWINGS

In order to illustrate the technical solutions in the embodiments of the present application more clearly, the following briefly introduces the drawings that are used in the description of the embodiments. Obviously, the drawings in the following description are only some embodiments of the present application. For those of ordinary skill in the art, other drawings can also be obtained from these drawings without creative effort.
FIG. 1 is a network architecture diagram of a communication system;
FIG. 2 is a flowchart of a method for configuring a CG;
FIG. 3 is a flowchart of a method for configuring a CG provided by an exemplary embodiment of the present application;
FIG. 4 is a flowchart of a method for configuring a CG;
FIG. 5 is a flowchart of a method for configuring a CG;
FIG. 6 is a flowchart of a method for configuring a CG;
FIG. 7 is a block diagram of an apparatus for configuring a CG;
FIG. 8 is a block diagram of an apparatus for configuring a CG;
FIG. 9 is a schematic structural diagram of a communication device provided by an exemplary embodiment of the present application.

### DETAILED DESCRIPTION

In order to make the objectives, technical solutions and advantages of the present application clearer, the embodiments of the present application will be further described in detail below with reference to the accompanying drawings.

### URLLC related background

URLLC needs to support the transmission of Factory automation, Transport Industry, Electrical Power Distribution and other services in the 5G system. In order to support the transmission of the URLLC service, the CG is enhanced, that is, at least one CG configuration is introduced, and the specific configuration and use of CG resources (such as supporting the period of slot granularity, supporting the autonomous transmission of CG, etc.) are enhanced.

### CG enhancements in URLLC

In order to support the high latency requirement of the URLLC service, the URLLC enhances the CG period and supports the service period of any slot-level granularity.

In order to support multiple URLLC services and high latency requirements of URLLC services, URLLC introduces multiple types of CGs (multiple CGs). The Hybrid Automatic Repeat reQuest (HARQ) processes of different CG configurations are different, and the configuration parameter harq-ProcID-Offset2 ensures that the processes of different CGs are different.

Due to the conflict between CG resources and other resources, in order to ensure that the packaged Medium Access Control Protocol Data Unit (Deprioritized Medium Access Control Protocol Data Unit, Deprioritized MAC PDU) in the CG resources are not discarded/transmitted as soon as possible, autonomous transmission for CG is introduced. For the CG of the deprioritized MAC PDU that cannot be transmitted due to resource conflict, the subsequent CG resources of the same HARQ process in the same CG configuration can be used to perform new transmission. The UE determines to use the autonomous transmission by the configuration parameter autonomousTx.

### NR-U related background

The Third Generation Partnership Project (3GPP) working group approved the establishment of the NR unlicensed working method in December 2018. The goal of the project is to make NR work in the unlicensed frequency bands, including the following working scenarios:
scenario A: carrier aggregation scenario, where the Primary Cell (PCell) is the licensed spectrum, and the Secondary cell (SCell) operating on the unlicensed spectrum is aggregated through carrier aggregation;
scenario B: dual-connection working scenario, PCell is Long-Term Evolution (LTE) licensed spectrum, Primary Secondary Cell (PScell) is NR unlicensed spectrum;
scenario C: independent working scenario, NR works as an independent cell in unlicensed spectrum;
scenario D: NR single-cell scenario, the UpLink (UL) works in the licensed spectrum, and the DownLink (DL) works in the unlicensed spectrum;
scenario E: dual-connection working scenario, PCell is NR licensed spectrum, PScell is NR unlicensed spectrum.

Generally speaking, the working frequency band (Band) of NR-U is 5GHz unlicensed spectrum and 6GHz unlicensed spectrum. On the unlicensed spectrum, the design of NR-U should ensure fairness with other systems already working on these unlicensed spectrums, such as WiFi. The principle of fairness is that NR-U cannot affect the systems (such as WiFi) already deployed on the unlicensed spectrum more than the influence between those systems.

To ensure fair coexistence among systems on the unlicensed spectrum, energy detection has been agreed as a basic coexistence mechanism. The general energy detection mechanism is the LBT mechanism. The basic principle of the mechanism is that: before the base station or the terminal (transmitting end) transmits data on the unlicensed spectrum, it needs to listen for a period of time according to regulations. If the result of listening indicates that the channel is in an idle state, the transmitting end can transmit data to the receiving end. If the listening result indicates that the channel is in an occupied state, the transmitting end needs to roll back for a period of time and continue to listen to the channel according to the regulations, and only when the channel listening result is being in the idle state, it can transmit data to the receiving end.

There are currently four channel access mechanisms (categories) defined in NR-U:

### Category 1: direct transmission mechanism:

This mechanism is used for the transmitting side to transmit quickly 0after the switching gap within the Channel Occupancy Time (COT); where the switching gap refers to the switching time when the transmission is received, and the typical value is not more than 16us.

### Category 2: LBT mechanism that does not require random back-off

This mechanism means that the time for the UE to listen to the channel is definite, which is generally relatively short, such as 25us.

### Category 3: LBT mechanism of random back-off (fixed contention window)

In the LBT process, the transmitting side randomly selects one random value in the contention window to determine the time to listen to the channel.

### Category 4: LBT mechanism of random back-off (the contention window is not fixed)

In the LBT process, the transmitting side randomly selects one random value in the contention window to determine the time to listen to the channel, and the contention window is variable.

To sum up, for the terminal, the base station needs to transmit data to the terminal within the MCOT time. If the base station does not preempt the channel, that is, outside the MCOT time, the terminal will not receive the scheduling data from the base station to the terminal.

### Uplink LBT failure in NR-U

The uplink transmission initiated by the UE mainly includes the following categories:
scheduling request (SR): used to request uplink resources;
Physical Random Access Channel (PRACH) transmission: due to triggering by RACH, the UE needs to send msg1;
Physical Uplink Shared Channel (PUSCH) transmission: including CG-based uplink data transmission and Dynamic Grant (DG)-based uplink data transmission;
physical layer signaling transmission: including acknowledgement/non- acknowledgement (ACK/NACK) feedback, channel state information (CSI) reporting, etc.

In the unlicensed frequency band, the UE needs to use LBT to detect whether the channel is available before transmitting SR, PRACH or PUSCH. If the channel is unavailable, i.e., LBT fails, the UE needs to wait until the next transmission opportunity to perform LBT again. If LBT failure is detected, the physical layer needs to notify the MAC layer of LBT failure information.

### CG enhancement in NR-U

For flexible resource selection, the HARQ process of NR-UCG is not calculated according to the formula, but selected by the UE itself. For one CG resource, RRC configures one HARQ process set, and the UE may select one HARQ process from the HARQ process set for this CG transmission. The specifically configured HARQ process interval is determined by the parameter harq-ProcID-Offset and the parameter nrofHARQ-Processes.

To support back-to-back resource configuration, NR-U introduces multiple types of CG (multiple CG). At least one CG configuration may share the HARQ process.

A CG retransmission timer (cg-RetransmissionTimer) is introduced to support automatic retransmission of resources when CG resources cannot be transmitted due to LBT failure. After the CG retransmission timer expires, if the CG timer (ConfiguredGrantTimer) does not expire, the corresponding HARQ process may be retransmitted.

CG transmission may be interrupted by dynamically scheduling downlink control information (DCI) and downlink feedback information (DFI). The specific behavior is shown in Table 1 below:

**Table 1**

| | DFI=ACK | DFI=NACK | DCI=new tx | DCI=retx | CG timer expires |
|---|---|---|---|---|---|
| CG timer | Stop | No impact | Start/restart | Start/restart | None |
| CG retransmission timer | Stop | Stop | Stop | Stop | Stop |

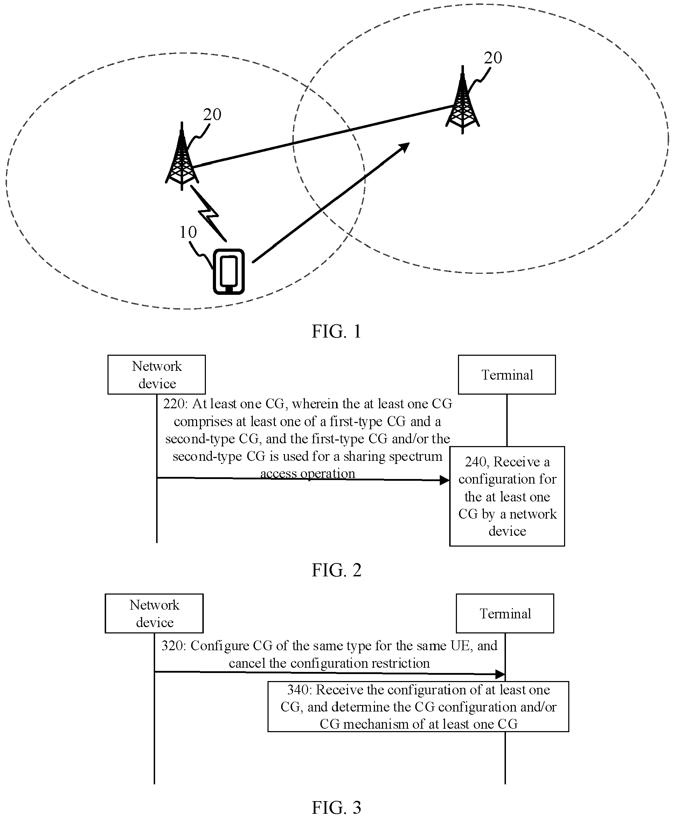

FIG. 1 shows a schematic diagram of a system architecture provided by an embodiment of the present application. The system architecture may include: a terminal device 10 and a network device 20.

The number of the terminal devices 10 is usually multiple, and one or more terminal devices 10 may be distributed in a cell managed by each network device 20. The terminal device 10 may include various handheld devices, in-vehicle devices, wearable devices, computing devices with wireless communication functions, or other processing devices connected to wireless modems, as well as various forms of user equipment (UE), mobile stations (MS) and so on. For convenience of description, in the embodiments of the present application, the devices mentioned above are collectively referred to as terminal devices.

The network device 20 is an apparatus deployed in an access network to provide a wireless communication function for the terminal device 10. The network device 20 may include various forms of macro base stations, micro base stations, relay stations, access points, and the like. In systems using different radio access technologies, the names of devices with network device functions may vary, for example, in 5G NR systems, they are called gNodeBs or gNBs. As communication technology evolves, the name "network device" may change. For convenience of description, in the embodiments of the present application, the above-mentioned apparatuses for providing a wireless communication function for the terminal device 10 are collectively referred to as network devices.

The " 5G NR system" in the embodiments of the present disclosure may also be referred to as a 5G system or an NR system, and the NR system may be a communication system supporting NR-U, but those skilled in the art can understand its meaning. The technical solutions described in the embodiments of the present disclosure may be applicable to the 5G NR system, and may also be applicable to the subsequent evolution system of the 5G NR system.

FIG. 2 shows a flowchart of a method for configuring a CG provided by an embodiment of the present application. FIG. 2 exemplifies the application of the method to the communication system shown in FIG. 1. The method includes the following steps.

In **step 220:** the network device configures at least one CG for the terminal, the at least one CG including at least one of a first type of CG and a second type of CG, and the first type of CG and/or the second type of CG being used for a shared spectrum access operation.

The first type of CG is used for the shared spectrum access operation, which may be understood as: the CG resources configured by the first type of CG are transmitted or used on the unlicensed band, or the CG resources configured by the first type of CG are used for transmitting uplink or uplink services or uplink data on the unlicensed band. The shared spectrum may be understood as an unlicensed spectrum or an unlicensed band. The first type of CG includes: a CG configuration of the first type of CG, a CG mechanism of the first type of CG, at least one of specific parameters including the configuration of the first type of CG.

The second type of CG is used for the shared spectrum access operation, which may be understood as: the CG resources configured by the second type of CG are transmitted or used on the unlicensed band, or the CG resources configured by the second type of CG are used for transmitting uplink (or uplink service or uplink data) in the unlicensed band. The second type of CG includes: a CG configuration of the second type of CG, a CG mechanism of the second type of CG, at least one of specific parameters including the configuration of the second type of CG.

Illustratively, the first type of CG includes a CG configuration that supports high-reliability and low-latency services, or, the first type of CG is a CG configuration when Rel-16 supports uplink services on a licensed band or NR system, or, the first type of CG is a CG configuration when Rel-16 supports high-reliability and low-latency services on the licensed band or NR system. Or, the first type of CG includes a CG configuration that supports high-reliability and low-latency services on the licensed band and/or unlicensed band. The high-reliability and low-latency services include, but are not limited to: at least one of URLLC services, time-sensitive services, and V2X services.

Illustratively, the second type of CG includes a CG configuration when the unlicensed band or the NR-U system supports uplink services, or a CG configuration when Rel-16 supports uplink services on the unlicensed band or the NR-U system.

Optionally, the network device sends at least one of CG configuration information and first indication information to the terminal, where at least one of the CG configuration information and the first indication information is used to configure at least one CG for the terminal, or, determine the transmission mechanism used by the CG transmission.

In **step 240:** the terminal receives a configuration of at least one CG by the network device.

Optionally, the terminal receives at least one of the RRCCG configuration information and the first indication information sent by the network device, and determines at least one CG according to at least one of the CG configuration information and the first indication information.

To sum up, the method provided in this embodiment can provide the enhanced multiple types of CGs in the NR-U interference-controlled scenario by configuring at least one of the first type of CG and the second type of CG on the unlicensed band by the network device, so as to ensure the communication quality and communication success rate in this scenario.

In an optional embodiment based on FIG. 2, the network device configures only the same type of CG resources for the same UE. For example, the network device configures only the first type of CG for the first UE, and configures only the second type of CG for the second UE. Alternatively, the network device configures different types of CG resources for at least one UE. For example, the network device configures at least one CG for the UE, and different CGs correspond to different types. For example, the network device configures at least one CG for the UE, and the at least one CG includes a first type of CG and a second type of CG.

Optionally, a first CG in the at least one CG is the first type of CG, a second CG in the at least one CG is the second type of CG, and the second CG is other than the first CG in the at least one CG, and/or, a third type of CG exists in the at least one CG, and the third type of CG has the characteristics of both the first type of CG and the second type of CG. Exemplarily, the third type of CG has the mechanisms or configuration parameters of both the first type of CG and the second type of CG.

In an optional embodiment based on FIG. 2, the network device sends first indication information to the UE, and the UE receives the first indication information, where the first indication information is used for indicating at least one of the following information:
a configured CG resource type;
a type of CG mechanism used;
whether to configure only the first type of CG;
whether to configure only the second type of CG;
whether the first type of CG and the second type of CG are configured at the same time;
whether the CG mechanism of the first type of CG and the CG mechanism of the second type of CG are used at the same time.

In an optional embodiment based on FIG. 2, the UE sends capability information to the network device, and the network device matches at least one CG for the UE according to the capability information. The capability information includes at least one of first capability information and second capability information.

The first capability information is used for reporting whether the first type of CG or the CG configuration of the first type of CG or the CG mechanism of the first type of CG is supported to be used for the shared spectrum access operation.

The second capability information is used for reporting whether to support both the first type of CG and the second type of CG, or to support the CG configurations of the first type of CG and the second type of CG at the same time, or to support the CG mechanisms of the first type of CG and the second type of CG at the same time.

Optionally, the first capability information and/or the second capability information may be based on each UE, or may be based on each HARQ process, or may be based on each CG, or may be based on each CG group.

The above-mentioned embodiments may be freely combined and implemented. Three different combinations of exemplary embodiments are used for the description below.

**In order to cancel the configuration restriction of NR-U, the CG configuration or CG mechanism corresponding to URLLC may be configured for shared spectrum access operation, and only one type of CG configuration or CG mechanism is configured for the same UE.**

FIG. 3 shows a flowchart of a method for configuring a CG provided by an exemplary embodiment of the present application. This embodiment is illustrated by taking the method applied to the communication system shown in FIG. 1 as an example. The method includes the following steps.

In **step 320:** the network device configures the same type of CG for the same UE, and cancels a configuration restriction.
**a) The network device configures only the CG configuration or CG mechanism of the same CG type for the same UE.**

Taking the first type of CG related to the high-reliability and low-latency service as an example, the network device configures only the first type of CG for the first UE, or adopts the CG configuration of the first type of CG, or uses the CG mechanism of the first type of CG. The first type of CG includes a CG configuration that supports high-reliability and low-latency services, or the first type of CG includes a CG configuration when supporting uplink services on the licensed band or NR system, or the first type of CG includes a CG configuration when high-reliability and low-latency services are supported on the licensed band or NR system. Optionally, the first type of CG is a configuration or a configuration manner or a usage mechanism corresponding to Rel-16. The high-reliability and low-latency services include, but are not limited to, at least one of URLLC services, time-sensitive services, and V2X services.

Taking the second type of CG related to NR-U as an example, the network device configures only the second type of CG for the second UE, or adopts the CG configuration of the second type of CG, or uses the CG mechanism of the second type of CG. The second type of CG includes a CG configuration when the unlicensed spectrum or the NR-U system supports uplink services. Optionally, the second type of CG is the configuration or configuration manner or usage mechanism corresponding to Rel-16.

**b) The network device cancels or modifies the restriction of at least one parameter of the above CG.**

The network device sets the above-mentioned first parameter of the CG as an optional parameter. The above-mentioned CG includes at least one of the first type of CG and the second type of CG.

The first parameter includes at least one of the following configuration parameters:
- a first HARQ process offset (harq-ProcID-Offset);
- a CG retransmission timer (cg-RetransmissionTimer);
- a second HARQ process offset (harq-ProcID-Offset2);
- a redundant version of repeated transmission (repK_RV);
- an autonomous transmission (autonomousTX).

Optionally, the first parameter includes the following indication parameters:
- two least significant bits of the system frame number corresponding to the random access channel resource (*two LSB bits of the SEN corresponding to the PRACH occasion*).

In one example, the network device cancels the configuration restriction of the second type of CG (corresponding to NR-U), and uses the CG configuration of the first type of CG (corresponding to URLLC) or CG configuration for the shared spectrum access operation. In particular:
1. At least one of the configuration parameter harq-ProcID-Offset and the configuration parameter cg-RetransmissionTimer is an optional configuration under shared spectrum or unlicensed band;
2. In the message 2 scheduled by the DCI, the indication parameter *two LSB bits of the SFN corresponding to the PRACH occasion* is an optional configuration under the shared spectrum or unlicensed band.

**c) the network device configures only the first type of CG or the CG configuration of the first type of CG or the CG mechanism of the first type of CG for the first UE.**

When configuring the first type of CG, the network device configures the first UE with a CG configuration that supports high-reliability and low-latency services; or, the network device configures the first UE with a CG configuration when supporting uplink services on a licensed band or an NR system; or, the network device configures for the first UE with the CG configuration when the licensed band or the NR system supports the high-reliability and low-latency service. Optionally, the first type of CG is a configuration or a configuration manner or a usage mechanism corresponding to Rel-16. The high-reliability and low-latency services include, but are not limited to, at least one of URLLC services, time-sensitive services, and V2X services.

Optionally, the network device configures the first type of CG for the first UE according to a first resource configuration manner, where the first resource configuration manner includes configuring at least one of the following parameters:
- a second HARQ process offset (harq-ProcID-Offset2);
- a redundant version of repeated transmission (repK_RV);
- an autonomous transmission (autonomousTX).

Optionally, the network device configures the first type of CG for the first UE according to a first resource configuration manner, where the first resource configuration manner includes not configuring at least one of the following parameters:
- a first HARQ process offset harq-ProcID-Offset;
- a CG retransmission timer CG-RetransmissionTimer.

For example, the current bandwidth is an unlicensed band, and the network device configures CG index 1, CG index 2, and CG index 3 to the first UE using the first resource configuration manner. Correspondingly, the network device does not configure at least one configuration parameter of harq-ProcID-Offset, cg-RetransmissionTimer to the first UE. At the same time, the network device configures at least one configuration parameter of harq-ProcID-Offset2, repK_RV, autonomousTX to the first UE.

**d) the network device configures only the second type of CG or the CG configuration of the second type of CG or the CG mechanism of the second type of CG for the second UE.**

When configuring the second type of CG, the network device configures for the second UE the CG configuration when the unlicensed spectrum or the NR-U system supports uplink services, or the network device configures the second UE with the CG configuration when the unlicensed spectrum or the NR-U system supports Ultra-Reliable Low-Latency Communications (URLLC) services; optionally, the second type of CG is the configuration or configuration manner or usage mechanism corresponding to Rel-16.

In one example, the network device only configures the second type of CG, or only configures the enhanced second type of CG for the NR-U system or frequency point. The enhanced second type of CG includes but is not limited to: the second type of CG supporting URLLC transmission, or CG enhanced by the R17 for the NR-U.

Optionally, the network device configures a second type of CG for the second UE according to a second resource configuration manner, where the second resource configuration manner includes configuring at least one of the following parameters:
- a first HARQ process offset harq-ProcID-Offset;
- a CG retransmission timer CG-RetransmissionTimer.

Optionally, the network device configures the second type of CG for the second UE according to a second resource configuration manner, where the second resource configuration manner includes not configuring at least one of the following parameters:
- a second HARQ process offset;
- a redundant version of repeated transmissions;
- an autonomous transmission.

For example, the current bandwidth is an unlicensed band, and the network device configures CG index 4 and CG index 5 to the second UE by using the second resource configuration manner. Correspondingly, the network device configures at least one configuration parameter of harq-ProcID-Offset, cg-RetransmissionTimer to the second UE, and the network device does not configure at least one configuration parameter of harq-ProcID-Offset2, repK_RV, autonomousTX to the second UE.

In one example, it is optional for the network device to configure the terminal with the first type of CG or the second type of CG, or it is configurable for the terminal to configure the first type of CG or the second type of CG. The same terminal is only configured with the same type of CG; or, different CGs of the same terminal are only configured with the same type of CG. In other words, the network may choose which type of CG to configure for the terminal. Exemplarily, on the NR-U frequency point, the network configures the first type of CG for UE1 and the second type of CG for UE2. Exemplarily, on the NR-U frequency point, the network configures the first type of CG and the second type of CG for UE3.

Optionally, the network device sends at least one of the RRCCG configuration message and the first indication information to the terminal, where the at least one of the RRC message and the first indication information is used to configure at least one CG to the terminal. The RRCCG configuration message is an RRC message for CG configuration.

Optionally, the network device sends the first indication information. The first indication information is used for indicating that the current configuration is the CG configuration of the first type of CG, or the current configuration is the CG configuration of the second type of CG. Alternatively, the first indication information is used for indicating that the CG mechanism of the first type of CG is used, or the CG mechanism of the second type of CG is used.

In **step 340:** the terminal receives the configuration of the at least one CG by the network device, and determines the CG configuration and/or the CG mechanism of the at least one CG.

The terminal receives at least one of the RRCCG configuration information and the first indication information sent by the network device.

Optionally, the terminal determines at least one of the following information according to the RRCCG configuration information and/or the first indication information:
- whether the configured CG resources are of the same type;
- the configured CG resource type, the CG resource type includes: CG of the first type of CG or the second type of CG;
- the CG mechanism type used, the CG mechanism type includes: the CG mechanism of the first type of CG or the CG mechanism of the second type of CG;
- whether the first type of CG and the second type of CG are configured at the same time;
- whether to use the CG mechanism of the first type of CG and the CG mechanism of the second type of CG at the same time.

Optionally, when all the CG resources of the terminal are configured by the network device using the configuration manner of the first type of CG, the terminal configures the CG according to the configuration manner of the first type of CG, and/or, performs transmission according to the CG mechanism of the first type of CG.

Optionally, when all the CG resources of the terminal are configured by the network device using the configuration manner of the second type of CG, the terminal configures the CG according to the configuration manner of the second type of CG, and/or, performs transmission according to the CG mechanism of the second type of CG.

Optionally, when the RRCCG configuration information and/or the first indication information is used for indicating that the CG configuration or the CG mechanism of the first type of CG is used for all CG resources, the terminal performs the CG configuration according to the configuration manner of the first type of CG, and/or, performs transmission according to the CG mechanism of the first type of CG.

Optionally, when the RRCCG configuration information and/or the first indication information is used for indicating that the CG configuration or CG mechanism of the second type of CG is used for all CG resources, the terminal performs the CG configuration according to the configuration manner of the second type of CG, and/or, performs transmission according to the CG mechanism of the second type of CG.

To sum up, in the method provided in this embodiment, in the NR-U scenario, the network device configures the same type of CG for the same UE, and the same type is the first type of CG or the second type of CG. Among them, the same UE is only configured with the same type of CG, which can reduce the complexity of the UE.

**For the embodiment in which the configuration limitation of NR-U is retained, the CG configuration or CG mechanism corresponding to URLLC cannot be configured for shared spectrum access operation, and only one type of CG configuration or CG mechanism is configured for the same UE:**

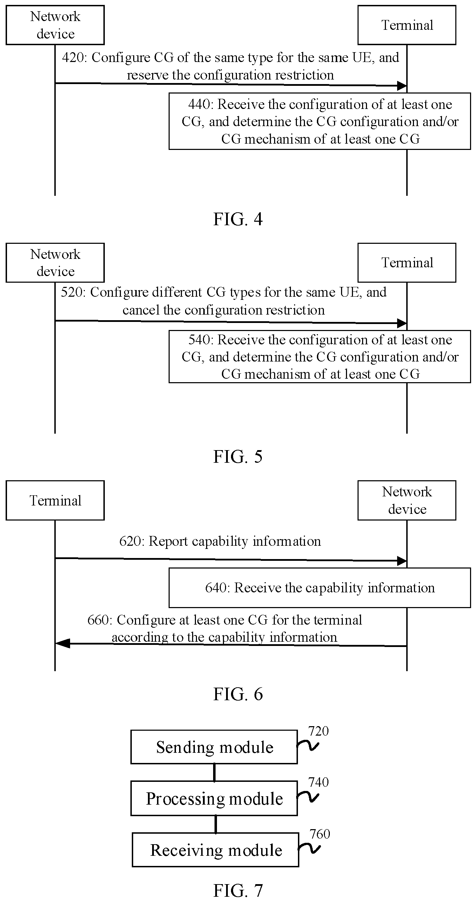

FIG. 4 shows a flowchart of a method for configuring a CG provided by an exemplary embodiment of the present application. This embodiment is illustrated by taking the method applied to the communication system shown in FIG. 1 as an example. The method includes the following steps.

In **step 420:** the network device configures only CGs of the same CG type for the same UE, and retains a configuration restriction.

**a) The network device configures only the CG configuration or CG mechanism of the same CG type for the same UE.**

Taking the second type of CG and NR-U as an example, in the unlicensed band or NR-U scenario, the network device configures only the second type of CG for the second UE, or only uses the CG configuration of the second type of CG, or only uses the CG mechanism of the second type of CG. The second type of CG includes the CG configuration when the unlicensed spectrum or the NR-U system supports uplink services, or the second type of CG includes the CG configuration when the unlicensed spectrum or NR-U system supports ultra-reliable and low-latency services. Optionally, the second type of CG is the configuration or configuration manner or usage mechanism corresponding to Rel-16. Optionally, the second type of CG is an enhanced configuration or configuration manner or usage mechanism for Rel-16.

In one example, the network device only configures the second type of CG, or only configures the enhanced second type of CG for the NR-U system or frequency point. The enhanced second type of CG includes, but is not limited to: the second type of CG supporting URLLC transmission, or CG enhanced for the NR-U by the R17.

In one example, it is optional for the network device to configure the terminal with the first type of CG or the second type of CG, or it is configurable for the terminal to configure the first type of CG or the second type of CG. The same terminal is only configured with the same type of CG; or, different CGs of the same terminal are only configured with the same type of CG. In other words, the network may choose which type of CG to configure for the terminal. Exemplarily, on the NR-U frequency point, the network configures the first type of CG for UE1 and the second type of CG for UE2. Exemplarily, on the NR-U frequency point, the network configures the first type of CG and the second type of CG for UE3.

**b) The network device retains the restriction of at least one parameter of the above-mentioned CG.**
1) The network device reserves the first parameter of the first type of CG as an unconfigured parameter, or configures at least part of the first parameter of the first type of CG as an optional parameter.

For the unlicensed band or NR-U scenarios, the network device does not configure the first parameter of the first type of CG to the UE, or configures at least part of the first parameter of the first type of CG as an optional parameter. The first parameter includes at least one of the following configuration parameters:
- a second HARQ process offset;
- a redundant version of repeated transmissions;
- an autonomous transmission.

For example, the autonomous transmission is set as an optional parameter, and the second HARQ process offset and the redundant version of repeated transmissions are set as un-configured parameters.

2) The network device reserves the second parameter of the second type of CG as a required parameter.

For the unlicensed band or NR-U scenarios, the network device reserves the second parameter of the second type of CG as a required parameter.

The second parameter includes at least one of the following configuration parameters:
- a first HARQ process offset;
- a CG retransmission timer.

The second parameter includes the following indication parameters:
- 2 least significant bits of the system frame number corresponding to the random access channel resource.

In one example, for a part of the CG or CG resources, the network device retains the above-mentioned restriction of at least one parameter of the CG. For example, for a part of CG or CG resources, the network device reserves the first parameter of the first type of CG as an unconfigured parameter; for another example, for a part of CG or CG resources, the network device reserves the second parameter of the second type of CG as a required parameter.

In one example, specifically:
1. At least one of the configuration parameter harq-ProcID-Offset and the configuration parameter cg-RetransmissionTimer is a required configuration under shared spectrum or unlicensed band;
2. In the message 2 scheduled by the DCI, the indication parameter *two LSB bits of the SFN corresponding to the PRACH occasion* is a required configuration under the shared spectrum or unlicensed band.

Optionally, the network device sends at least one of the RRCCG configuration message and the first indication information to the terminal, where the at least one of the RRC message and the first indication information is used to configure at least one CG to the terminal. The RRCCG configuration message is an RRC message for CG configuration.

Optionally, the network device sends the first indication information. The first indication information is used for indicating that the current configuration is the CG configuration of the first type of CG, or the current configuration is the CG configuration of the second type of CG. Alternatively, the first indication information is used for indicating that the CG mechanism of the first type of CG is used, or the CG mechanism of the second type of CG is used.

In **step 440:** the terminal receives the configuration of the at least one CG by the network device, and determines the CG configuration and/or the CG mechanism of the at least one CG.

The terminal receives at least one of the RRCCG configuration information and the first indication information sent by the network device.

Optionally, the terminal determines at least one of the following information according to the RRCCG configuration information and/or the first indication information:
- whether the configured CG resources are of the same type;
- the configured CG resource type, the CG resource type includes: CG of the first type of CG or the second type of CG;
- the type of CG mechanism used, the CG mechanism type includes: the CG mechanism of the first type of CG or the CG mechanism of the second type of CG;
- whether the first type of CG and the second type of CG are configured at the same time;
- whether the CG mechanism of the first type of CG and the CG mechanism of the second type of CG are used at the same time.

Optionally, when all the CG resources of the terminal are configured by the network device using the configuration manner of the second type of CG, the terminal configures the CG according to the configuration manner of the second type of CG, and/or, performs transmission according to the configuration manner of the second type of CG.

Optionally, when the RRCCG configuration information and/or the first indication information is used for indicating that the CG configuration or CG mechanism of the second type of CG is used for all CG resources, the terminal performs the CG configuration according to the configuration manner of the second type of CG, and/or, performs the transmission according to the CG mechanism of the second type of CG.

To sum up, in the method provided in this embodiment, in the NR-U scenario, the network device configures the same type of CG for the same UE, and the same type is the first type of CG or the second type of CG. Among them, the same UE is only configured with the same type of CG, which can reduce the complexity of the UE.

**For the embodiment in which the configuration restriction of NR-U is cancelled, the CG configuration or CG mechanism corresponding to URLLC can be configured for shared spectrum access operation, and the same UE can be configured with different types of CG configurations or CG mechanisms at the same time:**

FIG. 5 shows a flowchart of a method for configuring a CG provided by an exemplary embodiment of the present application. This embodiment is illustrated by taking the method applied to the communication system shown in FIG. 1 as an example. The method includes the following steps.

In **step 520:** the network device configures different types of CGs for the same UE, and cancels the configuration restriction.

**a) The network device configures different types of CG configurations or CG mechanisms for the same UE.**

In a first possible design, the network device configures at least two CGs for the same UE, the first CG of the at least two CGs is the first type of CG, and the second CG of the at least two CGs is the second type of CG, the second CG is the remaining CG of the at least two CGs except the first CG. The network device simultaneously configures the first CG and the second CG for the UE.

The first CG adopts the CG configuration manner of the first type of CG, or uses the CG mechanism of the first type of CG. The first CG includes a CG configuration that supports high-reliability and low-latency services, or the first type of CG includes a CG configuration when uplink services are supported on the licensed band or NR system, or the first type of CG includes a CG configuration when high-reliability and low-latency services are supported on the licensed band or NR system. Optionally, the first type of CG is a configuration or a configuration manner or a usage mechanism corresponding to Rel-16. The high-reliability and low-latency services include, but are not limited to, at least one of URLLC services, time-sensitive services, and V2X services.

The second CG adopts the CG configuration manner of the second type of CG, or uses the CG mechanism of the second type of CG. The second type of CG includes a CG configuration when the unlicensed spectrum or the NR-U system supports uplink services. Optionally, the second type of CG is the configuration or configuration manner or usage mechanism corresponding to Rel-16.

That is, the network device simultaneously configures different types of CG configurations or CG mechanisms on a basis of per UE (perUE) or a single UE.

In a second possible design, the network device configures at least one CG for the same UE, there is a third type of CG in at least one CG, and the third type of CG has the characteristics of both the first type of CG and the second type of CG, or, supports at least part of the mechanism of the first type of CG and at least part of the mechanism of the second type of CG.

### For the first possible design:

for the first type of CG, the network device only configures the configuration parameters corresponding to the first type of CG; for the second type of CG, only configures the configuration parameters corresponding to the second type of CG; for the third type CG, configures at least part of the configuration parameters corresponding to the first type of CG and at least part of the configuration parameters corresponding to the second type of CG at the same time.

That is, the network device simultaneously configures different types of CG configurations or CG mechanisms on per CG (perCG) or single CG basis.

For example, for the first type of CG, the first parameter corresponding to the first type of CG is configured, but the second parameter corresponding to the second type of CG is not configured. For the second type of CG, the second parameter corresponding to the second type of CG is configured, but the first parameter corresponding to the first type of CG is not configured. For the third type of CG, at least some of the first parameters and at least some of the second parameters are configured simultaneously.

The first parameter includes at least one of the following configuration parameters:
a second HARQ process offset;
a redundant version of repeated transmissions;
an autonomous transmission.

The second parameter includes at least one of the following configuration parameters:
a first HARQ process offset;
a CG retransmission timer.

The second parameter further includes the following indication parameters: in the message 2 scheduled by the DCI, two least significant bits of the system frame number corresponding to the random access channel resource.

For example, the current bandwidth is an unlicensed band, and the network device configures the UE1 with CG indices 1 to 3, the first type of CG corresponding to the URLLC is used. Correspondingly, the network device does not configure at least one of harq-ProcID-Offset, cg-RetransmissionTimer, but configures at least one of harq-ProcID-Offset2, repK_RV,autonomousTX.

For example, the current bandwidth is an unlicensed band, the network device configures the UE2 with CG indices 4 and 5, and the first type of CG corresponding to the NR-U is used. Correspondingly, the network device configures at least one of harq-ProcID-Offset and cg-RetransmissionTimer, but does not configure at least one of harq-ProcID-Offset2, repK_RV,autonomousTX.

### For the second possible design:

The network device can configure the second parameter corresponding to the NR-U and the first parameter corresponding to the URLLC at the same time for the same CG resource belonging to the third type of CG.

For example, the network device simultaneously configures at least one of the following configurations to the UE: harq-ProcID-Offset2, repK_RV, autonomousTX, harq-ProcID-Offset, and cg-RetransmissionTimer.

In this scenario, for one CG resource, both NR-U and URLLC transmission mechanisms can be supported.

In one example, the CG configuration of the first type of CG is used for implementing the function or mechanism corresponding to the first type of CG; the CG configuration of the second type of CG is used for implementing the function or mechanism corresponding to the second type of CG; the CG configuration of the third type of CG is used for implementing functions or mechanisms corresponding to the first type of CG and the second type of CG.

**b) The network device cancels or modifies the restriction of at least one parameter of the above CG.**

The network device sets at least one parameter in the CG configuration as an optional parameter. Alternatively, the network device sets at least one parameter of the first type of CG and/or the second type of CG as an optional parameter. The above-mentioned CG includes at least one of a first type of CG, a second type of CG, and a third type of CG.

Optionally, the at least one parameter includes at least one of the following configuration parameters:
- a first HARQ process offset (harq-ProcID-Offset);
- a CG retransmission timer (cg-RetransmissionTimer);
- a second HARQ process offset (harq-ProcID-Offset2);
- a redundancy version of repeated transmission (repK_RV);
- an autonomous transmission (autonomousTX).

Optionally, at least one parameter further includes the following indication parameter:
- two least significant bits of the system frame number corresponding to the random access channel resource (*two LSB bits of the SEN corresponding to the PRACH occasion*).

In one example, the network device cancels the configuration restriction of the second type of CG (corresponding to NR-U), and uses the CG configuration of the first type of CG (corresponding to URLLC) or CG configuration for the shared spectrum access operation. In particular:
1. At least one of the configuration parameter harq-ProcID-Offset and the configuration parameter cg-RetransmissionTimer is an optional configuration under shared spectrum or unlicensed band;
2. In the message 2 scheduled by the DCI, the indication parameter *two LSB bits of the SFN corresponding to the PRACH occasion* is an optional configuration under the shared spectrum or unlicensed band.

In **step 540:** the terminal receives the configuration of the at least one CG by the network device, and determines the CG configuration and/or the CG mechanism of the at least one CG.

The terminal receives at least one of the RRCCG configuration information and the first indication information sent by the network device.

Optionally, the terminal determines at least one of the following information according to the RRCCG configuration information and/or the first indication information:
- whether the configured CG resources are of the same type;
- configured CG resource types, the CG resource types include: CG of the first type of CG or the second type of CG;
- the used CG mechanism type, the CG mechanism type includes: the CG mechanism of the first type of CG or the CG mechanism of the second type of CG;
- whether the first type of CG and the second type of CG are configured at the same time;
- whether to use the CG mechanism of the first type of CG and the CG mechanism of the second type of CG at the same time.

Optionally, when all the CG resources of the terminal are configured by the network device using the configuration manner of the first type of CG, the terminal configures the CG according to the configuration manner of the first type of CG, and/or, performs transmission according to the configuration manner of the first type of CG.

Optionally, when all the CG resources of the terminal are configured by the network device using the configuration manner of the second type of CG, the terminal configures the CG according to the configuration manner of the second type of CG, and/or, performs transmission according to the configuration manner of the second type of CG.

Optionally, when the RRCCG configuration information and/or the first indication information is used for indicating that the CG configuration or the CG mechanism of the first type of CG is used for all CG resources, the terminal performs the CG configuration according to the configuration manner of the first type of CG, and/or, performs the transmission according to the CG mechanism of the first type of CG.

Optionally, when the RRCCG configuration information and/or the first indication information is used for indicating that the CG configuration or CG mechanism of the second type of CG is used for all CG resources, the terminal performs the CG configuration according to the configuration manner of the second type of CG, and/or, performs the transmission according to the CG mechanism of the second type of CG.

To sum up, in the method provided in this embodiment, in the NR-U scenario, the network device configures the same type of CG for the same UE, and the same type is the first type of CG or the second type of CG. Among them, the same UE is only configured with the same type of CG, which can reduce the complexity of the UE.

In an optional embodiment based on FIG. 3 or FIG. 4 or FIG. 5, as shown in FIG. 6, the above method further includes the following steps.

In **step 620:** the terminal reports capability information to the network device;

The capability information includes: at least one of first capability information and second capability information. The first capability information and the second capability information may be reported separately or together. In the case where the first capability information and the second capability information are reported together, the first capability information and the second capability information are carried in the same message and reported, or carried in two different messages and reported separately.

The first capability information is used for reporting whether to support the first type of CG or the CG configuration of the first type of CG or the CG mechanism of the first type of CG to be used for the shared spectrum access operation.

The second capability information is used for reporting whether to support both the first type of CG and the second type of CG, or to support the CG configurations of the first type of CG and the second type of CG at the same time, or to support the CG mechanisms of the first type of CG and the second type of CG at the same time.

In **step 640:** the network device receives the capability information reported by the terminal.

The network device receives the first capability information reported by the terminal, and/or, the network device receives the second capability information reported by the terminal.

In **step 660:** the network device configures at least one CG for the terminal according to the capability information.

The network device configures the terminal with the first type of CG and/or the second type of CG according to the capability information of the terminal; or configures the terminal with the CG configuration of the first type of CG and/or the second type of CG; or configures the terminal with the CG mechanism of the first type of CG and/or the second type of CG.

The network device configures at least one of the first type of CG, the second type of CG, and the third type CG for the terminal according to the capability information of the terminal; or configures the terminal with the CG configuration of at least one of the first type of CG, the second type of CG, and the third type CG; or, configures the terminal with the CG mechanism of at least one of the first type of CG, the second type of CG, and the third type of CG.

Optionally, the at least one CG configured by the network does not exceed the capability limit of the terminal.

It should be noted that the capability information is based on each UE (perUE) or a single UE, or the capability information is based on each CG (perCG) or a single CG, or the capability information is based on each CG group (perCGgroup) or a single CG group, or the capability information is based on each HARQ process (perHARQ process) or a single HARQ process.

To sum up, in the method provided in this embodiment, the terminal reports capability information, and the network device configures at least one CG for the terminal according to the capability information, which can reasonably configure the CG that matches the capability of the terminal, and avoids configuring the terminal with the CG beyond the capability range which results in a waste of communication resources.

The above-mentioned embodiments may be implemented independently or may be implemented in any combination.

FIG. 7 shows a block diagram of an apparatus for configuring a CG provided by an embodiment of the present application. The apparatus may be applied to a network device, and the apparatus includes:

a sending module 720, configured to configure at least one CG for the terminal, where the at least one CG includes at least one of a first type of CG and a second type of CG, and the first type of CG and/or the second type of CG is used for a shared spectrum access operation.

In an optional design of this embodiment, the first type of CG includes a CG configuration that supports high-reliability and low-latency services, or the first type of CG is a CG configuration when uplink services are supported on the licensed band or the NR system, or, the first type of CG is the CG configuration when the licensed band or NR system supports high-reliability and low-latency services; the second type of CG includes the CG configuration when the unlicensed spectrum or the NR-U system supports uplink services. The high-reliability and low-latency services include, but are not limited to, at least one of URLLC services, time-sensitive services, and V2X services.

In an optional design of this embodiment, the apparatus further includes:
a processing module 740, configured to cancel or modify a restriction of a first parameter of the first type of CG;
   and/or,
a processing module 740, configured to cancel or modify a restriction of a second parameter of the second type of CG.

In an optional design of this embodiment, the processing module 740 is configured to set the first parameter of the first type of CG as an optional parameter; and/or, set the second parameter of the second type of CG as an optional parameter.

In an optional design of this embodiment, the processing module 740 is configured to retain the restriction of the first parameter of the first type of CG; and/or retain the restriction of the second parameter of the second type of CG.

In an optional design of this embodiment, the processing module 740 is configured to reserve the first parameter of the first type of CG as an unconfigured parameter; and/or reserve the second parameter of the second type of CG as a required parameter.

In an optional design of this embodiment, the first parameter includes at least one of the following configuration parameters: a second HARQ process offset harq-ProcID-Offset2;
a redundant version for repeated transmissions repK_RV;
an autonomous transmission autonomousTX.

In an optional design of this embodiment, the second parameter includes at least one of the following configuration parameters:
a first HARQ process offset harq-ProcID-Offset;
a CG retransmission timer CG-RetransmissionTimer.

In an optional design of this embodiment, the second parameter includes at least one of the following indication parameters: 2 least significant bits of the system frame number corresponding to the random access channel resource.

In an optional design of this embodiment, the sending module 720 is configured to configure only the first type of CG for the terminal; configure only the second type of CG for the terminal; where the same terminal is only configured with CGs of the same type.

In an optional design of this embodiment, the sending module 720 configures the terminal with a CG configuration that supports high-reliability and low-latency services; or configures the terminal with a CG configuration when the licensed band or NR system supports uplink services, or configures the terminal with the CG configuration when the licensed band or NR system supports high-reliability and low-latency services; or, configures the terminal with the first type of CG according to the first resource configuration manner, the first resource configuration manner includes not configuring at least one of the following parameters: the first HARQ process offset harq-ProcID-Offset2; the CG retransmission timer CG-RetransmissionTimer.

In an optional design of this embodiment, the sending module 720 is configured to configure for the terminal the CG configuration when the unlicensed spectrum or the NR-U system supports uplink services; or, configure for the terminal the CG configuration when the unlicensed spectrum or the NR-U system supports ultra-reliability and low-latency services; or configure for the terminal the second type of CG according to the second resource configuration manner, the second resource configuration manner includes not configuring at least one of the following first parameters: the second HARQ process offset harq-ProcID-Offset2; the redundant version of repeated transmissions repK_RV; the autonomous transmission autonomousTX.

In an optional design of this embodiment, the sending module 720 is configured to configure only the second type of CG, or only the enhanced second type of CG for the new radio unlicensed spectrum (NR-U) system or frequency point.

In an optional design of this embodiment, it is optional for the sending module 720 to configure the first type of CG or the second type of CG for the terminal, or it is configurable to configure for the terminal the first type of CG or the second type of CG;
where the same terminal is configured with only the same type of CG; or, different CGs of the same terminal are configured with only the same type of CG.

In an optional design of this embodiment, the sending module 720 configures at least one CG for at least one terminal, and the at least one CG includes the first type of CG and the second type of CG.

In an optional design of this embodiment, the first CG in the at least one CG is the first type of CG, the second CG in the at least one CG is the second type of CG, and the second CG is the remaining CG in the at least one CG other than the first CG; or, there is a third type of CG in the at least one CG, and the third type of CG has the characteristics of both the first type of CG and the second type of CG.

In an optional design of this embodiment, the first type of CG is configured with a first parameter corresponding to the first type of CG;
the second type of CG is configured with a second parameter corresponding to the second type of CG;
the third type CG is configured with the first parameter and the second parameter at the same time.

In an optional design of this embodiment, the CG configuration of the first type of CG is used for implementing the function or mechanism corresponding to the first type of CG; the CG configuration of the second type of CG is used for implementing the function or mechanism corresponding to the second type of CG; the CG configuration of the third type CG is used for implementing the functions or mechanisms corresponding to the first type of CG and the second type of CG.

In an optional design of this embodiment, the apparatus further includes:
a receiving module 760, configured to receive capability information reported by the terminal;
the sending module 720 is configured to configure the at least one CG for the terminal according to the capability information.

In an optional design of this embodiment, the receiving module 760 is configured to receive first capability information reported by the terminal, where the first capability information is used for reporting whether to support the first type of CG or the CG configuration of the first type of CG or the CG mechanism of the first type of CG to be used for a shared spectrum access operation; and/or, receive second capability information reported by the terminal, where the second capability information is used for reporting whether to support the first type of CG and the second type of CG simultaneously, or support the CG configurations of the first type of CG and the second type of CG simultaneously, or support the CG mechanisms of the first type of CG and the second type of CG simultaneously.

In an optional design of this embodiment, the sending module 720 is configured to send first indication information to the terminal, where the first indication information is used for indicating at least one of the following information:
a configured CG resource type;
a used CG mechanism type;
whether to configure only the first type of CG;
whether to configure only the second type of CG;
whether the first type of CG and the second type of CG are configured at the same time;
whether the CG mechanism of the first type of CG and the CG mechanism of the second type of CG are used at the same time.

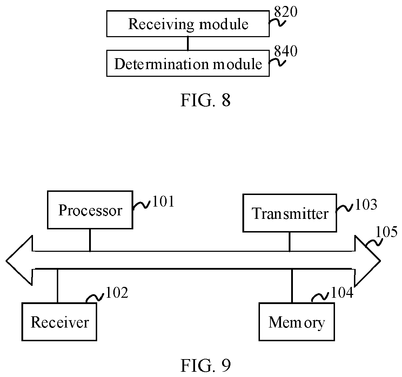

FIG. 8 shows a block diagram of an apparatus for configuring a CG provided by an embodiment of the present application. The apparatus may be applied to a terminal, and the apparatus includes:
a receiving module 820, configured to receive a configuration of at least one CG by a network device, where the at least one CG includes at least one of a first type of CG and a second type of CG, the first type of CG and/or the second type of CG is used for a shared spectrum access operation;
a determination module 840, configured to determine a CG configuration and/or a CG mechanism of the at least one CG.

In an optional design of this embodiment, the determining module 840 is configured to determine at least one of the following information according to the RRCCG configuration information and/or the first indication information sent by the network device:
a configured CG resource type;
a used CG mechanism type;
whether to configure only the first type of CG;
whether to configure only the second type of CG;
whether the first type of CG and the second type of CG are configured at the same time;
whether the CG mechanism of the first type of CG and the CG mechanism of the second type of CG are used at the same time.

FIG. 9 shows a schematic structural diagram of a communication device (network device or terminal) provided by an exemplary embodiment of the present application. The communication device includes: a processor 101, a receiver 102, a transmitter 103, a memory 104 and a bus 105.

The processor 101 includes one or more processing cores, and the processor 101 executes various functional applications and information processing by running software programs and modules.

The receiver 102 and the transmitter 103 may be implemented as a communication component, which may be a communication chip.

The memory 104 is connected to the processor 101 through the bus 105.

The memory 104 may be configured to store at least one instruction, and the processor 101 may be configured to execute the at least one instruction, so as to implement various steps in the foregoing method embodiments.

Additionally, the memory 104 may be implemented by any type or combination of volatile or non-volatile storage devices including, but not limited to, a magnetic or optical disk, an electrically erasable programmable Read Only Memory (Erasable Programmable Read Only Memory, EEPROM), an Erasable Programmable Read Only Memory (EPROM), a Static Random Access Memory (SRAM), a Read Only Memory (ROM), a magnetic memory, a flash memory, a Programmable Read-Only Memory (PROM).

In an exemplary embodiment, a computer-readable storage medium is also provided. The computer-readable storage medium stores at least one instruction, at least one piece of program, code set or instruction set, the at least one instruction, the at least one piece of program, the code set or the instruction set is loaded and executed by the processor to implement the method for configuring a CG executed by the terminal device or the network device provided by each of the above method embodiments.

Those of ordinary skill in the art can understand that all or part of the steps of implementing the above embodiments can be completed by hardware, or can be completed by instructing relevant hardware through a program, and the program can be stored in a computer-readable storage medium. The storage medium mentioned may be a read-only memory, a magnetic disk or an optical disk, etc.

The protection scope of the present application is defined by the appended claims.

## Claims

1. A method for configuring a configured grant, CG, comprising:
configuring at least one CG for a terminal (10), wherein the at least one CG comprises a second type of CG, and the second type of CG is used for a shared spectrum access operation;
the method further comprising:
setting a second parameter of the second type of CG as an optional parameter, wherein the second parameter comprises at least one of following configuration parameters: a first HARQ process offset harq-ProcID-Offsett, and a CG retransmission time CG-RetransmissionTimer; and
sending at least one CG configuration to the terminal (10).

2. The method of claim 1, wherein:
the second type of CG comprises a CG configuration when an unlicensed spectrum or a new radio unlicensed, NR-U, system supports an uplink service.

3. The method of claim 1, wherein the at least one CG further comprises a first type of CG,
the method further comprising:
setting a first parameter of the first type of CG as an optional parameter.

4. The method of claim 3, wherein the first parameter comprises at least one of following configuration parameters:
a second HARQ process offset harq-ProcID-Offset2;
a redundant version of repeated transmission repK_RV;
an autonomous transmission autonomousTX.

5. A method for configuring a configured grant, CG, comprising:
receiving a configuration of at least one CG by a network device (20), wherein the at least one CG comprises a second type of CG, and the second type of CG is used for a shared spectrum access operation; and
determining a CG configuration and/or a CG mechanism of the at least one CG.
wherein a second parameter of the second type of CG is an optional parameter, wherein the second parameter comprises at least one of following configuration parameters: a first HARQ process offset harq-ProcID-Offsett, and a CG retransmission time CG-RetransmissionTimer.

6. The method of claim 5, wherein:
the second type of CG comprises a CG configuration when an unlicensed spectrum or a new radio unlicensed, NR-U, system supports an uplink service.

7. The method of claim 5, wherein the at least one CG further comprises a first type of CG, wherein a first parameter of the first type of CG is an optional parameter.

8. The method of claim 7, wherein the first parameter comprises at least one of following configuration parameters:
a second HARQ process offset harq-ProcID-Offset2;
a redundant version of repeated transmission repK_RV;
an autonomous transmission autonomousTX.

9. A terminal (10), comprising:
a processor (101);
a transceiver connected to the processor;
a memory (104) for storing executable instructions for the processor;
wherein the processor (101) is configured to load and execute the executable instructions to implement the method for configuring a CG of any of claims 5 to 8.

10. A network device (20), comprising:
a processor (101);
a transceiver connected to the processor;
a memory (104) for storing executable instructions for the processor;
wherein the processor (101) is configured to load and execute the executable instructions to implement the method for configuring a CG of any one of claims 1 to 4.

11. A computer readable storage medium, wherein executable instructions are stored in the readable storage medium, and the executable instructions are loaded and executed by a processor (101) to implement the method for configuring a CG of any one of claims 1-4 or 5-8.

## Patentansprüche

1. Verfahren zum Konfigurieren einer konfigurierten Gewährung bzw. CG, das Folgendes umfasst:
Konfigurieren mindestens einer CG für ein Endgerät (10), wobei die mindestens eine CG einen zweiten Typ von CG umfasst und der zweite Typ von CG für eine Operation eines Zugriffs auf ein gemeinsam genutztes Spektrum verwendet wird;
wobei das Verfahren ferner Folgendes umfasst:
Einstellen eines zweiten Parameters des zweiten Typs von CG als einen optionalen Parameter, wobei der zweite Parameter mindestens einen der folgenden Konfigurationsparameter umfasst: einen ersten HARQ-Prozess-Offset harq-ProcID-Offsett und eine CG-Neuübertragungszeit CG-RetransmissionTimer; und
Senden von mindestens einer CG-Konfiguration an das Endgerät (10).

2. Verfahren nach Anspruch 1, wobei:
der zweite Typ von CG eine CG-Konfiguration umfasst, wenn ein lizenzfreies Spektrum oder ein lizenzfreies New-Radio- bzw. NR-U-System einen Uplink-Dienst unterstützt.

3. Verfahren nach Anspruch 1, wobei die mindestens eine CG ferner einen ersten Typ von CG umfasst,
wobei das Verfahren ferner Folgendes umfasst:
Einstellen eines ersten Parameters des ersten Typs von CG als einen optionalen Parameter.

4. Verfahren nach Anspruch 3, wobei der erste Parameter mindestens einen der folgenden Konfigurationsparameter umfasst:
einen zweiten HARQ-Prozess-Offset harq-ProcID-Offset2;
eine redundante Version von wiederholter Übertragung repK_RV;
eine autonome Übertragung autonomousTX.

5. Verfahren zum Konfigurieren einer konfigurierten Gewährung bzw. CG, das Folgendes umfasst:
Empfangen einer Konfiguration von mindestens einer CG durch eine Netzvorrichtung (20), wobei die mindestens eine CG einen zweiten Typ von CG umfasst und der zweite Typ von CG für eine Operation eines Zugriffs auf ein gemeinsam genutztes Spektrum verwendet wird; und
Bestimmen einer CG-Konfiguration und/oder eines CG-Mechanismus der mindestens einen CG,
wobei ein zweiter Parameter des zweiten Typs von CG ein optionaler Parameter ist, wobei der zweite Parameter mindestens einen der folgenden Konfigurationsparameter umfasst: einen ersten HARQ-Prozess-Offset harq-ProcID-Offsett und eine CG-Neuübertragungszeit CG-RetransmissionTimer.

6. Verfahren nach Anspruch 5, wobei:
der zweite Typ von CG eine CG-Konfiguration umfasst, wenn ein lizenzfreies Spektrum oder ein lizenzfreies New-Radio- bzw. NR-U-System einen Uplink-Dienst unterstützt.

7. Verfahren nach Anspruch 5, wobei die mindestens eine CG ferner einen ersten Typ von CG umfasst, wobei ein erster Parameter des ersten Typs von CG ein optionaler Parameter ist.

8. Verfahren nach Anspruch 7, wobei der erste Parameter mindestens einen der folgenden Konfigurationsparameter umfasst:
einen zweiten HARQ-Prozess-Offset harq-ProcID-Offset2;
eine redundante Version von wiederholter Übertragung repK_RV;
eine autonome Übertragung autonomousTX.

9. Endgerät (10), das Folgendes umfasst:
einen Prozessor (101);
einen Sendeempfänger, der mit dem Prozessor verbunden ist;
einen Speicher (104) zum Speichern von ausführbaren Anweisungen für den Prozessor;
wobei der Prozessor (101) dazu ausgelegt ist, die ausführbaren Anweisungen zu laden und auszuführen, um das Verfahren zum Konfigurieren einer CG nach einem der Ansprüche 5 bis 8 zu implementieren.

10. Netzvorrichtung (20), die Folgendes umfasst:
einen Prozessor (101);
einen Sendeempfänger, der mit dem Prozessor verbunden ist;
einen Speicher (104) zum Speichern von ausführbaren Anweisungen für den Prozessor;
wobei der Prozessor (101) dazu ausgelegt ist, die ausführbaren Anweisungen zu laden und auszuführen, um das Verfahren zum Konfigurieren einer CG nach einem der Ansprüche 1 bis 4 zu implementieren.

11. Computerlesbares Speichermedium, wobei ausführbare Anweisungen in dem lesbaren Speichermedium gespeichert sind und die ausführbaren Anweisungen durch einen Prozessor (101) geladen und ausgeführt werden, um das Verfahren zum Konfigurieren einer CG nach einem der Ansprüche 1-4 oder 5-8 zu implementieren.

## Revendications

1. Procédé de configuration d'un octroi configuré (CG), comprenant l'étape consistant à :
configurer au moins un CG pour un terminal (10), l'au moins un CG comprenant un second type de CG et le second type de CG étant utilisé pour une opération d'accès à spectre partagé ;
le procédé comprenant en outre les étapes consistant à :
définir un second paramètre du second type de CG en tant que paramètre optionnel, le second paramètre comprenant au moins un des paramètres de configuration suivants : un premier décalage de processus HARQ harq-ProcID-Offsett et un temps de retransmission CG CG-RetransmissionTimer ; et
envoyer au moins une configuration CG au terminal (10).

2. Procédé selon la revendication 1, dans lequel :
le second type de CG comprend une configuration CG lorsqu'un spectre sans licence ou un système sans licence en nouvelle radio (NR-U) prend en charge un service en liaison montante.

3. Procédé selon la revendication 1, dans lequel l'au moins un CG comprend en outre un premier type de CG,
le procédé comprenant en outre l'étape consistant à :
définir un premier paramètre du premier type de CG en tant que paramètre optionnel.

4. Procédé selon la revendication 3, dans lequel le premier paramètre comprend au moins un des paramètres de configuration suivants :
un second décalage de processus HARQ harq-ProcID-Offset2 ;
une version redondante de transmission répétée repK_RV ;
une transmission autonome autonomousTX.

5. Procédé de configuration d'un octroi configuré (CG), comprenant les étapes consistant à :
recevoir une configuration d'au moins un CG par un dispositif de réseau (20), l'au moins un CG comprenant un second type de CG et le second type de CG étant utilisé pour une opération d'accès à spectre partagé ; et
déterminer une configuration CG et/ou un mécanisme CG de l'au moins un CG, un second paramètre du second type de CG étant un paramètre optionnel, le second paramètre comprenant au moins un des paramètres de configuration suivants : un premier décalage de processus HARQ harq-ProcID-Offsett et un temps de retransmission CG CG-RetransmissionTimer.

6. Procédé selon la revendication 5, dans lequel :
le second type de CG comprend une configuration CG lorsqu'un spectre sans licence ou un système sans licence en nouvelle radio (NR-U) prend en charge un service en liaison montante.

7. Procédé selon la revendication 5, dans lequel l'au moins un CG comprend en outre un premier type de CG, un premier paramètre du premier type de CG étant un paramètre optionnel.

8. Procédé selon la revendication 7, dans lequel le premier paramètre comprend au moins un des paramètres de configuration suivants :
un second décalage de processus HARQ harq-ProcID-Offset2 ;
une version redondante de transmission répétée repK_RV ;
une transmission autonome autonomousTX.

9. Terminal (10), comprenant :
un processeur (101) ;
un émetteur-récepteur connecté au processeur ;
une mémoire (104) pour stocker des instructions exécutables pour le processeur ;
le processeur (101) étant configuré pour charger et exécuter les instructions exécutables pour mettre en oeuvre le procédé de configuration d'un CG selon l'une quelconque des revendications 5 à 8.

10. Dispositif de réseau (20), comprenant :
un processeur (101) ;
un émetteur-récepteur connecté au processeur ;
une mémoire (104) pour stocker des instructions exécutables pour le processeur ;
le processeur (101) étant configuré pour charger et exécuter les instructions exécutables pour mettre en oeuvre le procédé de traitement d'un CG selon l'une quelconque des revendications 1 à 4.

11. Support de stockage lisible par ordinateur, des instructions exécutables étant stockées sur le support de stockage lisible et les instructions exécutables étant chargées et exécutées par un processeur (101) pour mettre en oeuvre le procédé de configuration d'un CG selon l'une quelconque des revendications 1 à 4 ou 5 à 8.
